Europäisches Patentamt

European Patent Office

Office européen des brevets

(11) Veröffentlichungsnummer: **0 140 241**
**B1**

(12) **EUROPÄISCHE PATENTSCHRIFT**

(45) Veröffentlichungstag der Patentschrift:
12.08.87

(21) Anmeldenummer: 84112206.2

(22) Anmeldetag: 11.10.84

(51) Int. Cl.⁴: **F 16 D 66/02**

(54) Trommelbremse mit Verschleisswarnleiter.

(30) Priorität: 14.10.83 DE 8329776 U

(43) Veröffentlichungstag der Anmeldung:
08.05.85 Patentblatt 85/19

(45) Bekanntmachung des Hinweises auf die Patenterteilung:
12.08.87 Patentblatt 87/33

(84) Benannte Vertragsstaaten:
DE FR GB IT

(56) Entgegenhaltungen:
DE-A-2 813 244
GB-A-1 311 089
US-A-1 902 759
US-A-2 981 929

(73) Patentinhaber: **LUCAS INDUSTRIES public limited
company, Great King Street, Birmingham, B19
2XF West Midlands (GB)**

(72) Erfinder: **Holz, Dietrich, Brunnenstrasse 4, D-5429
Niederbachheim (DE)**
Erfinder: **Heibel, Helmut, Wiesenstrasse 1, D-5431
Moschheim (DE)**
Erfinder: **Renn, Hans-Werner, Gleeserstrasse 23,
D-5471 Wassenach (DE)**

(74) Vertreter: **Wuesthoff, Franz, Dr.- Ing.,
Patentanwälte Wuesthoff -v. Pechmann-
Behrens- Goetz Schweigerstrasse 2, D-8000
München 90 (DE)**

EP 0 140 241 B1

## Beschreibung

Die Erfindung betrifft eine Trommelbremse mit mindestens einem Leiter, der an eine Steckkupplung angeschlossen ist, die sich durch eine Bremsträgerplatte hindurcherstreckt, an dieser befestigt und an deren Außenseite zum Anstecken eines Steckers einer weiterführenden Leitung ausgebildet ist, wobei die Steckkupplung in eine Vertiefung hineinragt, die an der Außenseite der Bremsträgerplatte ausgebildet ist, und mit einer an der Innenseite der Bremsträgerplatte ausgebildeten Erhebung, die zwei Bremsbacken gegen die beim Bremsen auf sie einwirkenden Umfangskräfte abstützt.

Eine solche Trommelbremse ist aus der GB-A-1 311 089 bekannt. Dort hat die Bremsträgerplatte an ihrer Außenseite nahe ihrem Rand zwei Vertiefungen, die einander diametral gegenüberliegen und an der Innenseite der Bremsträgerplatte entsprechende Erhebungen bilden. Die Erhebungen sind zwischen einem Flansch und einem Steg je einer Bremsbacke angeordnet, ohne diese zu berühren. In eine dieser Vertiefungen ragt eine Steckkupplung hinein, die sich durch die Bremsträgerplatte hindurcherstreckt, an deren Innenseite einen Kontaktstift trägt und außen einen Stecker aufnimmt, von dem eine weiterführende Leitung über eine Batterie und eine Warnlampe an Masse angeschlossen ist. Für mechanische, beispielsweise über einen Seilzug bewirkte, Feststellbremsungen lassen sich die beiden Bremsbacken mittels eines Hebels auseinanderspreizen, der an der Bremsträgerplatte gelagert ist, in betätigtem Zustand gegen den Kontaktstift stößt und dadurch den Stromkreis der Warnlampe schließt. Zwischen den beiden genannten Vertiefungen ist eine mittlere Vertiefung angeordnet, die tiefer ist und an der Innenseite der Bremsträgerplatte eine entsprechend höhere mittlere Erhebung bildet. Mit dieser ist mittels zweier Vollnieten eine Widerlageplatte vernietet, an der sich zwei benachbarte Enden der beiden Bremsbacken abstützen, sodaß je nach Drehrichtung der zugehörigen Bremstrommel die eine oder andere Bremsbacke die auf sie einwirkenden Umfangskräfte auf die mittlere Erhebung überträgt.

Aus der DE-A-2 813 244 ist eine Verschleißwarneinrichtung an einer Scheibenbremse bekannt, bei der das Ende eines Verschleißwarnleiters, der von einem Stecker ausgeht, in einen Reibbelag eingebettet ist. An einem belagfreien Teil einer den Reibbelag abstützenden Belagträgerplatte ist ein Hohlniet befestigt, auf dem eine Niederhaltefeder mit einer in ihrem mittleren Bereich ausgebildeten Windung gelagert ist. In den Hohlniet, der sich durch die Belagträgerplatte hindurcherstreckt, ist von der dem Bremsbelag zugewandten Seite her der mit dem Verschleißwarnleiter verbundene Stecker und von der gegenüberliegenden Seite her eine mit einer weiterführenden Leitung verbundene Steckbuchse eingesteckt.

Bei Trommelbremsen sind Verschleißwarneinrichtungen ebenfalls seit langem bekannt. So sind gemäß der US-A-1 902 759 an zwei bogenförmigen Bremsbacken zwischen deren Flanschen und daran befestigten Bremsbelägen isolierte Kupferstreifen als Verschleißwarnleiter eingebettet, die an Leitungen angeschlossen sind. Die Leitungen sind durch je ein Loch in einer Bremsträgerplatte hindurchgeführt und mit einer an deren Außenseite befestigten Steckkupplung verbunden. Von dort ist eine weiterführende Leitung zu einer Warnlampe und weiter zu einem Pol einer Batterie gelegt, deren anderer Pol an Masse angeschlossen ist. Wird bei fortgeschrittenem Bremsbelagverschleiß einer der Verschleißwarnleiter freigelegt, so stellt er einen elektrischen Kontakt mit der Bremstrommel her und schließt dadurch den Stromkreis der Warnlampe, die darauf aufmerksam machen soll, daß die Bremsbeläge ausgewechselt werden müssen, ehe sie vollständig verschlissen sind.

Entsprechendes gilt auch für eine Abwandlung dieser bekannten Verschleißwarneinrichtung, bei der ein Verschleißwarnleiter Bestandteil eines normalerweise geschlossenen Stromkreises ist, der bei fortgeschrittenem Belagverschleiß durch Zerstörung des Verschleißwarnleiters unterbrochen wird und dadurch ein optisches oder akustisches Signal auslöst.

Die Zuverlässigkeit dieser bekannten Verschleißwarneinrichtung läßt zu wünschen übrig, weil es leicht vorkommen kann, daß die an der Außenseite der Bremsträgerplatte angeordnete Steckkupplung selbst oder ihre Steckverbindung mit der weiterführenden Leitung durch unvorsichtige Handhabung beim Einbau oder durch Steinschlag und andere im Betrieb auftretende Einflüsse zerstört oder beschädigt wird.

Dies gilt auch für eine aus der US-PS 2 981 929 bekannte Verschleißwarneinrichtung an einer Trommelbremse, bei der die Steckkupplung in einem Loch der Bremsträgerplatte befestigt ist und dadurch selber die erforderliche Leitungsverbindung zwischen Innen- und Außenseite der Bremsträgerplatte herstellt. Auch in diesem Fall besteht die Gefahr, daß der Stecker der weiterführenden Leitung durch eine unbeabsichtigte unmittelbare äußere Krafteinwirkung von der Steckkupplung abgerissen wird.

Der Erfindung liegt deshalb die Aufgabe zugrunde, eine Trommelbremse derart weiterzubilden, daß die Gefahr einer Beschädigung oder unbeabsichtigten Trennung von Steckkupplung und Stecker der weiterführenden Leitung beseitigt oder zumindest wesentlich verringert wird.

Die Aufgabe ist bei einer Trommelbremse der eingangs beschriebenen Gattung erfindungsgemäß dadurch gelöst, daß der Leiter ein Verschleißwarnleiter ist, der an einer Bremsbacke befestigt ist, und daß der Vertiefung, in welche die Steckkupplung hineinragt, diejenige Erhebung an der Innenseite der Bremsträgerplatte entspricht, an der sich die Bremsbacken abstützen.

Wie beispielsweise die genannte GB-A-1 311 089 zeigt, ist es seit langem üblich, Bremsträgerplatten für Trommelbremsen als Stanz- oder Preßteil aus Blech derart zu gestalten, daß das Blech selbst an der Innenseite eine zwischen benachbarte Enden zweier Bremsbacken hineinragende Erhebung bildet, an der sich die Bremsbacken, im allgemeinen über eine mit der Erhebung vernietete Widerlagerplatte, abstützen. Die Tatsache, daß bei der Herstellung dieser, entsprechend ihrem Zweck hohen, Erhebung durch Stanzen oder Pressen eine entsprechend tiefe Vertiefung an der Außenseite der Bremsträgerplatte entsteht, ist jedoch bisher für die Unterbringung der Steckkupplung und des zugehörigen Steckers der weiterführenden Leitung nicht genutzt worden.

Erfindungsgemäß sind dagegen der von der Bremsträgerplatte nach außen ragende Teil der Steckkupplung und somit auch der Stecker der weiterführenden Leitung in dieser Vertiefung der Bremsträgerplatte raumsparend untergebracht, so daß sie kräftig und dementsprechend betriebssicher gestaltet werden können, ohne daß dadurch angesichts der bekannten Platzknappheit bei Trommelbremsen für kleine Räder von Personenkraftwagen zusätzliche Einbauprobleme entstehen. Durch die erfindungsgemäße Anordnung von Steckkupplung und Stecker der weiterführenden Leitung sind diese beiden Bauteile außerdem vor unbeabsichtigten äußeren Krafteinwirkungen wesentlich besser geschützt als dies bisher der Fall war. Somit trägt die Erfindung in zweifacher Weise dazu bei, die Betriebssicherheit der Verschleißwarneinrichtung zu erhöhen.

Wenn, wie ebenfalls aus der GB-A-1 311 089 bekannt, mit der Erhebung der Bremsträgerplatte eine Widerlagerplatte für die Bremsbacke vernietet ist, läßt sich die Erfindung besonders vorteilhaft dadurch ausgestalten, daß die Steckkupplung in einem zu der Vernietung gehörigen Hohlniet befestigt ist. Die wegen der Widerlagerplatte ohnehin erforderliche Vernietung läßt sich somit ohne Mehrkosten für die Verschleißwarneinrichtung nutzbar machen. Das Widerlager ist, damit es die Bremsbacken sicher abstützen kann, im allgemeinen erheblich dicker als die Bremsträgerplatte; infolgedessen ist der Hohlniet entsprechend lang, so daß er sich besonders gut für die Befestigung der Steckkupplung eignet.

Bei einer besonders vorteilhaften Ausführungsform der Erfindung weist die Steckkupplung ein druckknopfartiges Ende auf, das von der Vertiefung aus durch den Hohlniet hindurchgeknöpft ist. Auf diese Weise läßt sich die Steckkupplung mit besonders geringem Zeit- und Vorrichtungsaufwand montieren.

Es ist ferner zweckmäßig, wenn das druckknopfartige Ende der Steckkupplung an der Innenseite der Bremsträgerplatte durch einen zweiten lösbaren Stecker mit dem Verschleißwarnleiter verbunden ist. Durch Lösen dieses zweiten Steckers wird der bei abgenutzten Bremsbelägen erforderliche, meist unter beengten Platzverhältnissen stattfindende Ausbau der Bremsbacken erleichtert; an den ausgebauten Bremsbacken kann dann ohne weiteres festgestellt werden, ob der Verschleißwarnleiter zusammen mit den Bremsbelägen oder den gesamten Bremsbacken ausgewechselt werden muß oder wiederverwendet werden kann.

Ein Ausführungsbeispiel der Erfindung wird im folgenden anhand schematischer Zeichnungen mit weiteren Einzelheiten erläutert. Es zeigt:

Fig.1 eine Ansicht einer Trommelbremse ohne Bremstrommel,

Fig.2 einen vergrößerten Ausschnitt aus Fig.1 und

Fig.3 den Querschnitt III-III in Fig.II.

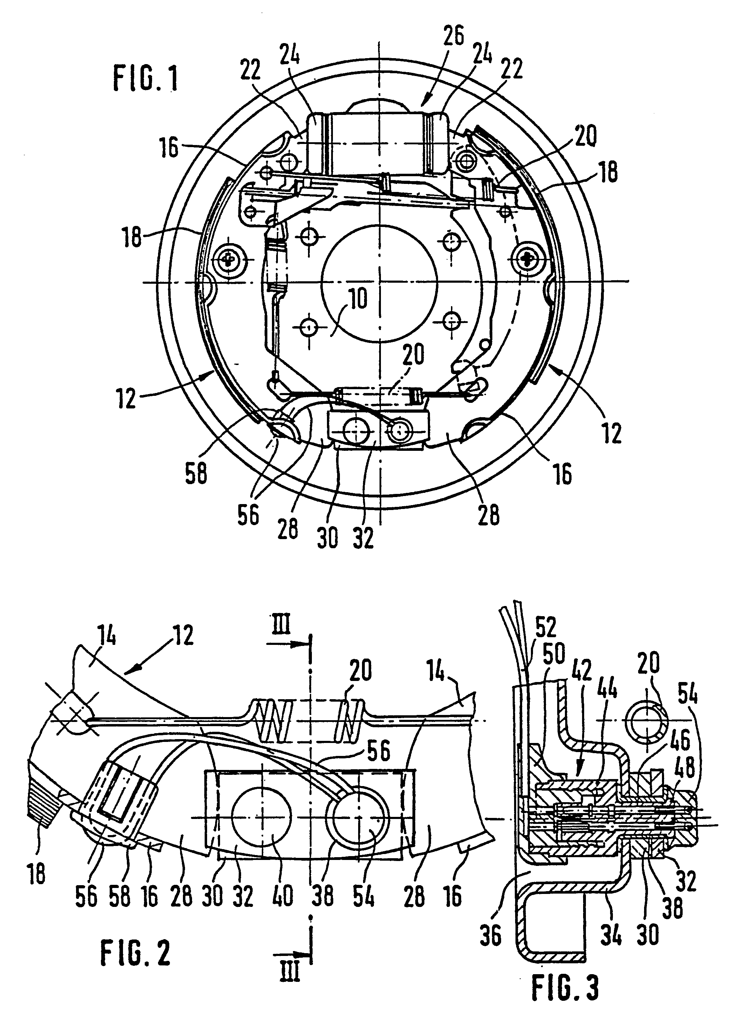

Die dargestellte Bremse ist eine Innenbacken-Trommelbremse mit einer kreisförmigen Bremsträgerplatte 10, an der ein Paar kreisbogenförmige Bremsbacken 12 abgestützt ist. Jede der Bremsbacken 12 ist aus einem im wesentlichen ebenen Steg 14 und einem bogenförmigen Flansch 16 zusammengesetzt und weist einen auf den Flansch aufgenieteten oder aufgeklebten Bremsbelag 18 auf. Zwei Rückstellfedern 20 verbinden die beiden Bremsbacken 12 derart miteinander, daß jede von ihnen mit einem, in Fig.1 oberen, Ende 22 an je einem Kolben 24 einer hydraulischen Betätigungsvorrichtung 26 anliegt und sich mit ihrem anderen, in Fig.1 unteren, Ende 28 an einer Widerlageplatte 30 abstützt.

Die Widerlagerplatte 30 hat einen rechteckigen, in Umfangsrichtung der Bremse langgestreckten Umriß und ist zusammen mit einer ebenfalls annähernd rechteckigen, jedoch etwas längeren Führungsplatte 32 mit einer kastenförmigen Erhebung 34 der Bremsträgerplatte 10 vernietet. Die Erhebung 34 ist durch Tiefziehen hergestellt, so daß an der von den Bremsbacken 12 abgewandten Außenseite der Bremsträgerplatte 10 eine komplementäre Vertiefung 36 ausgebildet ist.

Die Vernietung besteht aus einem Hohlniet 38 und einem weiteren Niet 40, der ebenfalls als Hohlniet ausgebildet sein kann, vorzugsweise jedoch ein Vollniet ist, der für sich allein imstande ist, sämtliche beim Bremsen auf die Widerlagerplatte 30 einwirkenden Umfangskräfte auf die Erhebung 34 zu übertragen.

Am Hohlniet 38 ist eine elektrische Steckkupplung 42 befestigt, die einen Hauptteil 44, einen Hals 46 und ein pilzförmiges Ende 48 aufweist. Mindestens das Ende 48 ist elastisch zusammendrückbar, so daß sich die Steckkupplung 42 befestigen läßt, indem das Ende 48 durch den Hohlniet 38 hindurchgesteckt wird. Der Schaft 46 ist derart bemessen, daß er ohne Radialspiel und möglichst mit einer leichten radialen Vorspannung an der Innenwand des Hohlniets 38 anliegt und der Hauptteil 44 und das Ende 48 der Steckkupplung 42 an den beiden Enden des Hohlniets mit axialer Vorspannung anliegen.

Der Hauptteil 44 der Steckkupplung 42 ist zur Befestigung eines im wesentlichen komplementär gestalteten ersten Steckers 50 ausgebildet, von dem eine Leitung 52 zu einem Signalgeber weiterführt, beispielsweise zu einer Kontrolllampe am Armaturenbrett eines mit der dargestellten Bremse ausgerüsteten Kraftfahrzeugs.

Das Ende 48 der Steckkupplung 42 ist zum Aufstecken eines zweiten Steckers 54 ausgebildet; von diesem führt ein Verschleißwarnleiter 56 zu einem Stopfen 58, der aus elastischem, elektrisch isolierendem Kunststoff besteht und druckknopfartig am Flansch 16 nahe dem unteren Ende 28 der in Fig.1 und 2 linken Bremsbacke 12 befestigt ist. Der Verschleißwarnleiter 56 ist schleifenförmig um den Stopfen 58 herumgelegt und ragt über den Flansch 16 hinaus, so daß er beim Bremsen mit der nicht dargestellten Bremstrommel in Berührung kommt, wenn der Bremsbelag 18 weitgehend, aber noch nicht vollständig abgenutzt ist.

Bei einem solchen Abnutzungszustand des Bremsbelags 18 genügt eine einzige kräftige Bremsung, um die Isolierung des Verschleißwarnleiters 56 zu zerstören und dadurch den Stromkreis des erwähnten Signalgebers über die Bremstrommel zu schließen, so daß ein Warnsignal abgegeben wird.

Für den Fall, daß dieses vorübergehende Signal nicht beachtet wird, kann die Verschleißwarneinrichtung derart geschaltet sein, daß sie ein Dauersignal abgibt, wenn der Verschleißwarnleiter 56 bei fortgesetzter oder erneuter Bremsung vollständig durchtrennt wird. Um diese Art der Signalgabe zu ermöglichen, sind die Steckkupplung 42 sowie die beiden Stecker 50 und 54 zweipolig ausgebildet.

## Patentansprüche

1. Trommelbremse mit mindestens einem Leiter, der an eine Steckkupplung (42) angeschlossen ist, die sich durch eine Bremsträgerplatte (10) hindurcherstreckt, an dieser befestigt und an deren Außenseite zum Anstecken eines Steckers (50) einer weiterführenden Leitung (52) ausgebildet ist, wobei die Steckkupplung (42) in eine Vertiefung (36) hineinragt, die an der Außenseite der Bremsträgerplatte (10) ausgebildet ist, und mit einer an der Innenseite der Bremsträgerplatte (10) ausgebildeten Erhebung (34), die zwei Bremsbacken (12) gegen die beim Bremsen auf sie einwirkenden Umfangskräfte abstützt, dadurch gekennzeichnet, daß der Leiter ein Verschleißwarnleiter (56) ist, der an einer Bremsbacke (12) befestigt ist, und daß der Vertiefung (36), in welche die Steckkupplung (42) hineinragt, diejenige Erhebung (34) an der Innenseite der Bremsträgerplatte (10) entspricht, an der sich die Bremsbacken (12) abstützen.

2. Trommelbremse nach Anspruch 1, bei der mit der Erhebung (34) der Bremsträgerplatte (10) eine Widerlagerplatte (30) für die Bremsbacken (12) vernietet ist, dadurch gekennzeichnet, daß die Steckkupplung (42) in einem zu der Vernietung gehörigen Hohlniet (38) befestigt ist.

3. Trommelbremse nach Anspruch 2, dadurch gekennzeichnet, daß die Steckkupplung (42) ein druckknopfartiges Ende (48) aufweist, das von der Vertiefung (36) aus durch den Hohlniet (38) hindurchgeknöpft ist.

4. Trommelbremse nach Anspruch 3, dadurch gekennzeichnet, daß das druckknopfartige Ende (48) der Steckkupplung (42) an der Innenseite der Bremsträgerplatte (10) durch einen zweiten lösbaren Stecker (54) mit dem Verschleißwarnleiter (56) verbunden ist.

## Claims

1. A drum brake having at least one conductor connected to a plug coupling (42) which extends through a brake support plate (10), is secured to the same, and at its exterior is formed for attaching a plug (50) of a continuing cable (52), the plug coupling (42) projecting into a recess (36) which is formed at the exterior of the brake support plate (10), the brake further having an elevation (34) formed at the inner side of the brake support plate (10) and supporting two friction pad assemblies (12) against circumferential forces acting onto the same during braking, characterized in that the conductor is a wear alarm conductor (56) that is mounted to a friction pad assembly (12), and that the elevation (34) on the inner side of the brake support plate (10) by which the friction pad assemblies (12) are supported corresponds to the recess (36) into which the plug coupling (42) projects.

2. The drum brake as claimed in claim 1 in which a thrust plate (30) for the friction pad assemblies (12) is riveted to the elevation (34) on the brake support plate (10), characterized in that the plug coupling (42) is fixed in a hollow rivet (38) being part of said riveting.

3. The drum brake as claimed in claim 2, characterized in that the plug coupling (42) has a press button-like end (48) which, starting from the recess (36), is buttoned through the tubular rivet (38).

4. The drum brake as claimed in claim 3, characterized in that the press button-like end (48) of the plug coupling (42) is connected to the wear alarm conductor (56) by way of a second detachable plug (54) at the inner side of the brake support plate (10).

## Revendications

1. Frein à tambour comportant au moins un conducteur raccordé à un accouplement enfichable (42) s'étendant à travers un plateau support de frein (10), sur lequel il est fixé et dont le côté extérieur est conçu pour brancher un connecteur (50) d'un conducteur de prolongation (52), l'accouplement enfichable (42) faisant saillie dans une cavité (36) ménagée dans la face extérieure du plateau support de frein (10), et une élévation (34) formée sur le côté intérieur du plateau support de frein (10), sur laquelle prennent appui deux mâchoires de frein (12) lorsque des forces périphériques agissent sur elles pendant le freinage, caractérisé en ce que le conducteur est un conducteur (56) pour un indicateur d'usure fixé sur une mâchoire de frein (12), et que la cavité (36) dans laquelle fait saillie l'accouplement enfichable (42) correspond à une élévation (34) ménagée sur la face intérieure du plateau support de frein (10), sur laquelle prennent appui les mâchoires de frein (12).

2. Frein à tambour selon la revendication 1, dans lequel une plaque de contre-appui (30) pour les mâchoires de frein (12) est rivetée sur l'élévation (34) du plateau support de frein (10), caractérisé en ce que l'accouplement enfichable (42) est fixé dans un rivet creux (38) associé au rivetage.

3. Frein à tambour selon la revendication 2, caractérisé en ce que l'accouplement enfichable (42) a une extrémité (48) à bouton poussoir s'étendant à partir de la cavité (36) à travers le rivet creux (38).

4. Frein à tambour selon la revendication 3, caracterisé en ce que l'extrémité (48) à bouton poussoir de l'accouplement enfichable (42) est reliée sur le côté intérieur du plateau support de frein (10) au conducteur (56) de l'indicateur d'usure par un deuxième connecteur amovible (54).

FIG.1

FIG.2

FIG.3